# EUROPEAN PATENT APPLICATION

(11) **EP 4 830 996 A1**
(43) Date of publication of application: **28.10.2026**
(21) Application number: 26173174.9
(22) Date of filing: 17.04.2026
(51) Int. Cl.: B60N 2/427, B60N 2/42, B60N 2/70, B60N 2/90, B60N 2/02, B60R 21/207

(54) **VEHICLE SEAT**

(30) Priority: 22.04.2025 JP 2025070915
(71) Applicant: Toyota Jidosha Kabushiki Kaisha, Toyota-shi, Aichi-ken 471-8571 (JP); TOYOTA BOSHOKU KABUSHIKI KAISHA, Kariya-shi, Aichi 448-8651 (JP); Toyoda Gosei Co., Ltd., Kiyosu-shi, Aichi 452-8564 (JP)
(72) Inventor: OHNO, Mitsuyoshi, TOYOTA-SHI, AICHI-KEN, 471-8571 (JP); FUKUSHIMA, Yusuke, TOYOTA-SHI, AICHI-KEN, 471-8571 (JP); TAKAGI, Yoshiya, KARIYA-SHI, AICHI, 448-8651 (JP); MASUDA, Yasushi, KIYOSU-SHI, AICHI, 452-8564 (JP)
(74) Representative: Cabinet Beau de Loménie

(57) **Abstract**

A vehicle seat (10) includes: a restraining member (16) which is housed in a seat cushion (12) and which is moveable between a storage position and a deployment position that is capable of supporting a pelvis of an occupant from a seat front side at further toward a seat upper side than the storage position; and an airbag device (18) that is housed in the seat cushion, that inflates and deploys in a case in which a frontal collision is detected or predicted, and that moves the restraining member (16) to the deployment position, wherein an energy absorption portion (24B) is provided at a face, at a seat rear side, of the restraining member (16) that is disposed at the deployment position.

## Description

### BACKGROUND

### Technical Field

The present disclosure relates to a vehicle seat.

### Related Art

Japanese Patent Application Laid Open (JP-A) No. 2022-32266 discloses a movable seat pan that suppresses movement of a waist portion of an occupant during a vehicle collision. Specifically, the movable seat pan is configured to receive the waist portion of the occupant due to change from an inclined state to an upright state due to inflation and deployment of an airbag.

Compared to a configuration in which a seat cushion is made to bulge by an airbag or the like, the movable seat pan described in Japanese Patent Application Laid Open (JP-A) No. 2022-32266 enables movement of the waist portion of the occupant toward a seat front side to be reliably suppressed, even in a case in which the occupant is in a comfortable posture. However, there is a possibility that an excessive load is input to the waist portion of the occupant due to the waist portion of the occupant who is moving under inertia during a collision, such as a frontal collision of a vehicle, being directly received, and therefore, there is room for improvement in improving protection performance of the occupant.

### SUMMARY

An object of the present disclosure is to provide a vehicle seat that is capable of improving protection performance of an occupant while reliably suppressing inertial movement of the occupant during a vehicle collision.

A vehicle seat according to a first aspect includes: a restraining member which is housed in a seat cushion and which is moveable between a storage position and a deployment position that is capable of supporting a pelvis of an occupant from a seat front side at further toward a seat upper side than the storage position; and an airbag device that is housed in the seat cushion, that inflates and deploys in a case in which a frontal collision is detected or predicted, and that moves the restraining member to the deployment position, wherein an energy absorption portion is provided at a face, at a seat rear side, of the restraining member that is disposed at the deployment position.

In the vehicle seat according to the first aspect, the restraining member and the airbag device are provided in the seat cushion, and the restraining member is configured so as to be moveable between the storage position and the deployment position that is capable of supporting the pelvis of the occupant from the seat front side at further toward the seat upper side than the storage position. Furthermore, the airbag device inflates and deploys in a case in which a frontal collision is detected or predicted, and moves the restraining member to the deployment position. This enables the restraining member to be moved to the deployment position promptly during a vehicle collision, and enables inertial movement of the waist portion of the occupant toward the seat front side to be suppressed.

Furthermore, the energy absorption portion is provided at the face, at the seat rear side, of the restraining member that is disposed at the deployment position. Therefore, the pelvis of the occupant is received by the restraining member via the energy absorption portion, and excessive load can be suppressed from being input to the waist portion of the occupant.

A vehicle seat according to a second aspect is the vehicle seat according to the first aspect, wherein the restraining member includes: a bar main body that extends in a vehicle width direction; and a left and right pair of links, respective front end portions of the links being attached to end portions, in a seat width direction, of the bar main body, and respective rear end portions of the links being rotatably connected to connection portions positioned further toward the seat rear side than the bar main body.

In the vehicle seat according to the second aspect, the restraining member includes the bar main body and the links, and the bar main body extends in the vehicle width direction. A left and right pair of links are provided, and the respective front end portions of the links are attached to the end portions, in the seat width direction, of the bar main body. Furthermore, the respective rear end portions of the links are rotatably connected to the connection portions. This enables the bar main body to be moved from the storage position to the deployment position due to rotation of the rear end portions of the links. Furthermore, since the connecting portions are positioned further toward the seat rear side than the bar main body, in a state in which a load from the occupant is input to the bar main body via the energy absorption portion, a tensile load is applied to the links from the bar main body, thereby enabling a reaction force to be generated toward the vehicle rear side with respect to the occupant.

A vehicle seat according to a third aspect is the vehicle seat according to the second aspect, wherein the connection portions are respectively provided at left and right side frames configuring a skeleton of the seat cushion.

In the vehicle seat according to the third aspect, the connection portions are respectively provided at the side frames configuring the skeleton of the seat cushion, thereby enabling the links to be suppressed from falling out. Furthermore, the side frames are positioned further toward an outer side, in the seat width direction, than the region in which the occupant is seated, such that the links do not interfere with the occupant, even if the connection portions are disposed at the seat upper side.

A vehicle seat according to a fourth aspect is the vehicle seat according to the second aspect, wherein: the airbag device includes a bag main body and an inflator that is configured to supply gas to the bag main body; and the bag main body includes an extension portion that is disposed further toward the seat rear side than the bar main body during inflation and deployment and that configures the energy absorption portion.

In the vehicle seat according to the fourth aspect, in a case in which a frontal collision of the vehicle is detected or predicted, gas is generated from the inflator, such that the bag main body is inflated and deployed. Note that the bag main body includes the extension portion that configures the energy absorption portion, and the extension portion is disposed further toward the seat rear side than the bar main body during inflation and deployment. This enables the occupant to be protected without preparing a dedicated energy absorption member. Furthermore, when the bag main body is retracted, the extension portion is also retracted, such that the energy absorption portion does not give a sensation of a foreign body to the occupant in a normal use state.

A vehicle seat according to a fifth aspect is the vehicle seat according to the fourth aspect, wherein the extension portion covers a range from a seat rear side of the bar main body to a seat upper side of the bar main body.

In the vehicle seat according to the fifth aspect, the extension portion covers up to the seat upper side of the bar main body, such that load input to the thighs of the occupant positioned above the bar main body can be suppressed.

A vehicle seat according to a sixth aspect is the vehicle seat according to the fourth aspect, wherein, in the deployment position, the bar main body is disposed further toward the seat rear side and further toward the seat upper side than the inflator.

In the vehicle seat according to the sixth aspect, a reaction force is applied to the bag main body by the bar main body disposed further toward the seat rear side and further toward the seat upper side than the inflator. This enables a reaction force to be applied to the bag main body at a position that is closer to the occupant than to the inflator, enabling restraining force to be increased.

A vehicle seat according to a seventh aspect is the vehicle seat according to the second aspect, further including a lock mechanism that limits rotation of the bar main body toward a storage position side in a state in which the bar main body has moved to the deployment position.

In the vehicle seat according to the seventh aspect, rotation of the bar main body toward the storage position side is limited by the lock mechanism, such that the pelvis of the occupant can be effectively received by the bar main body.

A vehicle seat according to an eighth aspect is the vehicle seat according to the fourth aspect, wherein the airbag device includes a strap that is sewn to the bag main body and that holds the bar main body so as not to be capable of being pulled out.

In the vehicle seat according to the eighth aspect, the bar main body is inserted through the bag main body so as not to be capable of being pulled out therefrom due to the strap, thereby enabling the extension portion to be suppressed from being separated from the bar main body.

A vehicle seat according to a ninth aspect is the vehicle seat according to the fourth aspect, wherein a high pressure portion, which has a higher pressure than other portions, is provided at the extension portion of the bag main body.

In the vehicle seat according to the ninth aspect, by providing the high-pressure portion at the extension portion, in a case in which the pelvis of the occupant is received at the bar main body via the extension portion, the extension portion can be suppressed from deflating and a state arising in which the pelvis of the occupant is directly received by the bar main body.

A vehicle seat according to a tenth aspect is the vehicle seat according to the ninth aspect, wherein the high pressure portion is configured by an inner bag in which the inflator is housed.

In the vehicle seat according to the tenth aspect, the pelvis of the occupant can be reliably received by the high pressure portion due to prior inflation of the inner bag.

A vehicle seat according to an eleventh aspect is the vehicle seat according to the ninth aspect, wherein: the bag main body is partitioned into at least two chambers in a seat front-rear direction by a tether; and the high pressure portion is set in a chamber at the seat front side.

The vehicle seat according to the eleventh aspect can configure the high pressure portion with a simple configuration.

A vehicle seat according to a twelfth aspect includes: a restraining member which is housed in a seat cushion and which is moveable between a storage position and a deployment position that is capable of supporting a pelvis of an occupant from a seat front side at further toward a seat upper side than the storage position; and a piston-cylinder type actuator that is housed in the seat cushion and that moves the restraining member to the deployment position in a case in which a frontal collision is detected or predicted, wherein an energy absorption portion is provided at a face, at a seat rear side, of the restraining member that is disposed at the deployment position.

In the vehicle seat according to the twelfth aspect, the restraining member is configured so as to be movable between the storage position and the deployment position that is capable of supporting the pelvis of the occupant from the seat front side at further toward the seat upper side than the storage position. The piston-cylinder type actuator is housed in the seat cushion, and moves the restraining member to the deployment position in a case in which a frontal collision is detected or predicted. Furthermore, since the energy absorption portion is provided at the face, at the seat rear side, of the restraining member that is disposed at the deployment position, the pelvis of the occupant is received by the restraining member via the energy absorption portion, and excessive load can be suppressed from being input to the waist portion of the occupant.

As explained above, the vehicle seat according to the present disclosure enables protection performance of an occupant to be improved while reliably suppressing inertial movement of the occupant during a vehicle collision.

### BRIEF DESCRIPTION OF THE DRAWINGS

Exemplary embodiments of the present disclosure will be described in detail based on the following figures, wherein:
Fig. 1 is a side view schematically illustrating a vehicle seat according to a first exemplary embodiment;
Fig. 2 is a plan view illustrating relevant portions of the vehicle seat according to the first exemplary embodiment;
Fig. 3 is a side view illustrating relevant portions of the vehicle seat according to the first exemplary embodiment, illustrating a state prior to inflation and deployment of a bag main body;
Fig. 4 is a side view illustrating relevant portions of the vehicle seat according to the first exemplary embodiment, illustrating a state after inflation and deployment of the bag main body;
Fig. 5 is a side view illustrating relevant portions of a vehicle seat according to a modified example;
Fig. 6 is a side view illustrating relevant portions of a vehicle seat according to a second exemplary embodiment;
Fig. 7 is a side view illustrating relevant portions of a vehicle seat according to a third exemplary embodiment;
Fig. 8 is a plan view illustrating relevant portions of a vehicle seat according to a fourth exemplary embodiment;
Fig. 9 is a side view illustrating relevant portions of the vehicle seat according to the fourth exemplary embodiment, illustrating a state prior to actuation of a piston-cylinder type actuator; and
Fig. 10 is a side view illustrating relevant portions of the vehicle seat according to the fourth exemplary embodiment, illustrating a state in which the piston-cylinder type actuator has been actuated.

### DETAILED DESCRIPTION

### First Exemplary Embodiment

Explanation follows regarding a vehicle seat according to a first exemplary embodiment, with reference to the drawings. Note that in each of the drawings, the arrow FR, the arrow UP, and the arrow RH respectively indicate a seat front direction, a seat upward direction, and a vehicle right direction of a vehicle seat. In the following explanation, in cases in which front-rear, up-down, and left-right directions are described without any particular notation to the contrary, these indicate front and rear in a seat front-rear direction, up and down in a seat up-down direction, and left and right in a seat left-right direction (width direction), respectively. Furthermore, the seat front-rear direction of the vehicle seat does not have to coincide with a vehicle front-rear direction.

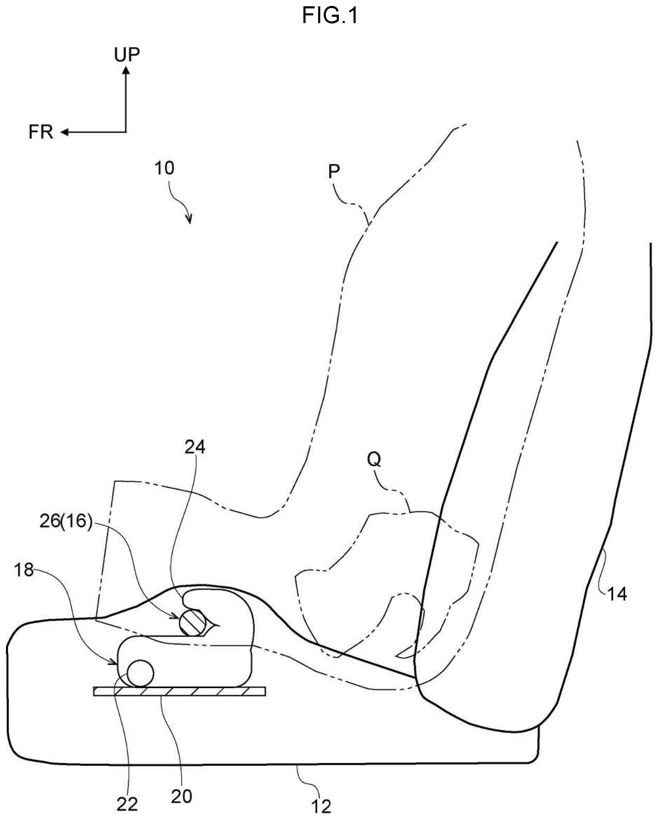

Fig. 1 is a side view schematically illustrating a vehicle seat 10 according to the present exemplary embodiment. As illustrated in Fig. 1, the vehicle seat 10 of the present exemplary embodiment includes a seat cushion 12 and a seatback 14.

The seat cushion 12 extends in the seat front-rear direction and the seat width direction, and is configured so as to be capable of supporting the buttocks and thighs of an occupant P from a seat lower side. Furthermore, the seat cushion 12 includes a cushion pad, which is not illustrated in the drawings, at an interior of the seat cushion 12.

Note that in the present exemplary embodiment, a restraining member 16 and an airbag device 18 are provided at the interior of the seat cushion 12. Details of the restraining member 16 and the airbag device 18 will be described below.

The seatback 14 is rotatably connected to a rear end portion of the seat cushion 12. The seatback 14 extends in the seat up-down direction and the seat width direction, and is configured such that the back of the occupant P can be supported from a seat rear side. Furthermore, the seatback 14 is provided with a back pad at an interior of the seatback 14, and a reclining device, which is not illustrated in the drawings, is provided at a coupling portion between the seatback 14 and the seat cushion 12. The reclining device is configured such that an angle of inclination of the seatback 14 with respect to the seat cushion 12 can be adjusted.

A headrest, which is not illustrated in the drawings, is provided at an upper end portion of the seatback 14. The headrest is fixed to the seatback 14 via a headrest stay, for example, and is configured such that the head of the occupant P can be supported from the seat rear side.

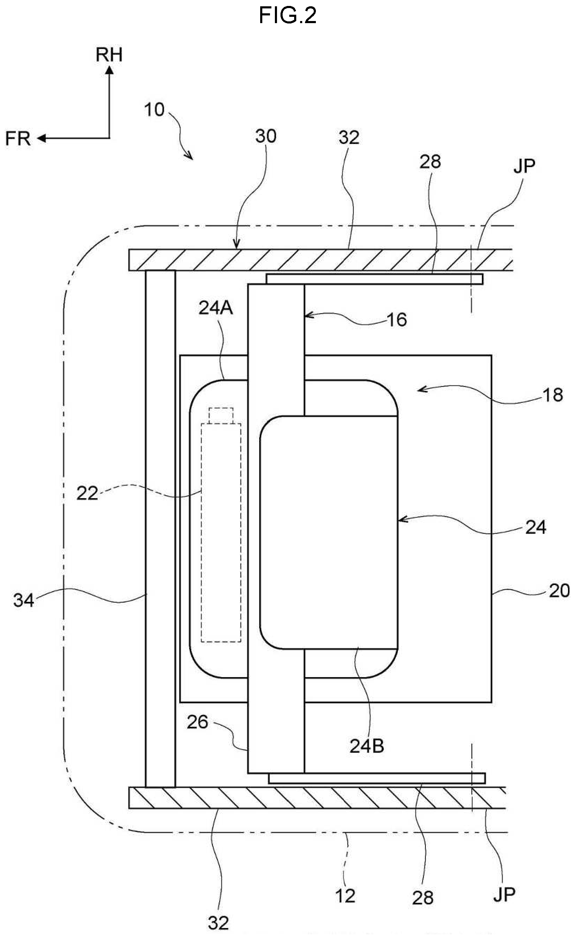

Fig. 2 is a plan view illustrating relevant portions of the vehicle seat 10 according to the first exemplary embodiment. As illustrated in Fig. 2, a support plate 20 is provided at the interior of the seat cushion 12. Furthermore, side frames 32 that configure a skeleton of the seat cushion 12 are provided at the interior of the seat cushion 12.

A left and right pair of side frames 32 are provided, and are disposed at end portions, in the seat width direction, of the seat cushion 12. Furthermore, each side frame 32 is a plate-like member that is made of metal, that extends in the seat front-rear direction, and that has a thickness direction along the seat width direction. A front end portion of each side frame 32 is coupled in the seat width direction by a front-side coupling member 34.

The front-side coupling member 34 is, for example, a substantially columnar metal member, and couples the front end portions of the left and right pair of side frames 32 to each other. Furthermore, a rear end portion of each side frame 32 is coupled in the seat width direction by a rear-side coupling member, which is not illustrated in the drawings, and a seat cushion frame 30 includes the side frames 32, the front-side coupling member 34, and the rear-side coupling member.

Note that the restraining member 16 is provided at the interior of the seat cushion 12. The restraining member 16 includes a bar main body 26 and a left and right pair of links 28.

The bar main body 26 is a substantially columnar member that extends in the vehicle width direction, and that is formed of a high rigidity material capable of supporting the pelvis Q of the occupant P. Furthermore, the respective links 28 are attached to end portions of the bar main body 26.

Each link 28 is an elongated member, and extends in the front-rear direction. A front end portion of the link 28 is attached to an end portion, in the seat width direction, of the bar main body 26, and a rear end portion of the link 28 is rotatably connected to a connection portion JP of the side frame 32.

A support shaft, which is not illustrated in the drawings, is provided at the connection portion JP, and the rear end portion of the link 28 is inserted through the support shaft. Furthermore, during normal travel, the link 28 may be locked so as not to rotate.

The bar main body 26 is configured so as to be movable between a storage position and a deployment position. Specifically, the bar main body 26 is movable between the storage position and the deployment position due to rotation of the links 28.

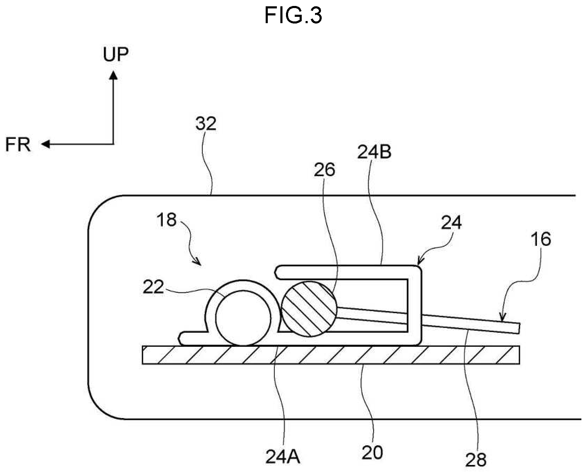

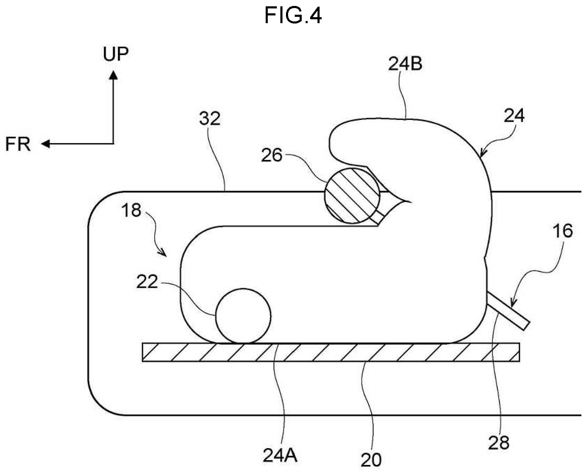

Fig. 3 is a view illustrating a state prior to actuation of the airbag device 18, and Fig. 4 is a view illustrating a state in which the airbag device 18 has been actuated. As illustrated in Fig. 3, in the storage position, the bar main body 26 is positioned in the vicinity of the support plate 20.

As illustrated in Fig. 4, in the deployment position, the bar main body 26 is disposed further toward the seat rear side and further toward a seat upper side than the storage position. Furthermore, as illustrated in Fig. 1, in a state in which the bar main body 26 is in the deployment position, the trim cover of the seat cushion 12 is raised, and the pelvis Q of the occupant P can be supported from a seat front side.

Note that in the present exemplary embodiment, as an example, a lock mechanism, which is not illustrated in the drawings and which limits rotation of the bar main body 26 toward a storage position side in a state in which the bar main body 26 has been moved to the deployment position, is provided. As the lock mechanism, for example, a known ratchet mechanism including gears or the like provided at the connection portion JP of the side frame 32 can be used. Furthermore, as the lock mechanism, a known one-way clutch mechanism or the like may be used.

As illustrated in Fig. 3, the support plate 20 is a substantially flat plate-like member attached to the seat cushion frame 30, and may be a seat pan or the like. Note that the airbag device 18 is provided at the support plate 20. The airbag device 18 includes an inflator 22 and a bag main body 24, and the inflator 22 is fixed to the support plate 20.

The inflator 22 is electrically connected to a controller, such as an airbag ECU, which is not illustrated in the drawings. In a case in which a frontal collision of the vehicle is detected or predicted by sensors installed at the vehicle, a signal is transmitted from the airbag ECU to the inflator 22, and the inflator 22 is actuated to generate gas. In this manner, the inflator 22 is configured so as to be capable of supplying gas to the bag main body 24.

The bag main body 24 is a bag-like member that is housed in a folded state during normal travel, and is inflated and deployed on actuation of the inflator 22 and being supplied with gas. Furthermore, the bag main body 24 includes a main chamber 24A and an extension portion 24B.

The main chamber 24A of the bag main body 24 is arranged on an upper face of the support plate 20, and is positioned below the bar main body 26. Namely, the main chamber 24A is positioned between the bar main body 26 of the restraining member 16 and the support plate 20, and extends in the seat width direction and the seat front-rear direction in a folded state.

The extension portion 24B extends upward from a rear end of the main chamber 24A, and is a portion that is folded back toward the seat front side. The extension portion 24B is integrally formed with the main chamber 24A, and gas flows from the inflator 22 through the main chamber 24A.

As illustrated in Fig. 4, in a state in which the bag main body 24 is inflated and deployed, the bar main body 26 of the restraining member 16 is lifted up together with inflation and deployment of the bag main body 24, and moves from the storage position to the deployment position. When this occurs, the link 28 rotates about the connection portion JP of the side frame 32.

The extension portion 24B is inflated and deployed, on being supplied with gas, from the rear end of the main chamber 24A, and covers a range from a seat rear side to a seat upper side of the bar main body 26. Furthermore, an energy absorption portion is configured by the extension portion 24B.

Specifically, in the deployment position, the bar main body 26 is disposed further toward the seat rear side and further toward the seat upper side than the inflator 22, and the seat rear side and the seat upper side of the bar main body 26 are covered by the extension portion 24B, such that some of the load input from the pelvis Q of the occupant P is absorbed.

### Operation

Next, explanation follows regarding operation of the vehicle seat 10 according to the present exemplary embodiment.

As illustrated in Fig. 1, in the vehicle seat according to the present exemplary embodiment, the restraining member 16 and the airbag device 18 are provided at the seat cushion 12. Furthermore, as illustrated in Fig. 3 and Fig. 4, the restraining member 16 includes the bar main body 26 that is configured so as to be moveable between the storage position, and the deployment position that is capable of supporting the pelvis Q of the occupant P from the seat front side at further toward the seat upper side than the storage position.

The airbag device 18 is inflated and deployed in a case in which a frontal collision is detected or predicted, and moves the bar main body 26 of the restraining member 16 to the deployment position. This enables the bar main body 26 to be moved to the deployment position promptly during a vehicle collision, and enables inertial movement of the waist portion of the occupant P toward the seat front side to be suppressed.

Furthermore, the extension portion 24B, which serves as the energy absorption portion, is provided at a face, at the seat rear side, of the bar main body 26 that is disposed at the deployment position. Therefore, the pelvis Q of the occupant P is received by the bar main body 26 via the energy absorption portion, and excessive load can be suppressed from being input to the waist portion of the occupant P.

In particular, in the present exemplary embodiment, the restraining member 16 includes the bar main body 26 and the links 28, and the bar main body 26 extends in the vehicle width direction. A left and right pair of links 28 are provided, and the respective front end portions of the links 28 are attached to the end portions, in the seat width direction, of the bar main body 26. Furthermore, the rear end portion of each link 28 is rotatably connected to the connection portion JP. This enables the bar main body 26 to be moved from the storage position to the deployment position due to rotation of the rear end portions of the links 28. Furthermore, since the connection portion JP is positioned further toward the seat rear side than the bar main body 26, in a state in which a load from the occupant P is input to the bar main body 26 via the energy absorption portion, a tensile load is applied to the links 28 from the bar main body 26, thereby enabling a reaction force to be generated toward the vehicle rear side with respect to the occupant.

In the present exemplary embodiment, the connection portion JP is provided at the side frame 32 configuring the skeleton of the seat cushion 12, thereby enabling the link 28 to be suppressed from falling out. Furthermore, as illustrated in Fig. 2, the side frame 32 is positioned further toward an outer side, in the seat width direction, than the region in which the occupant P is seated, such that the link 28 does not interfere with the occupant P, even if the connection portion JP is disposed at the seat upper side.

In the present exemplary embodiment, in a case in which a frontal collision of the vehicle is detected or predicted, gas is generated from the inflator 22, such that the bag main body 24 is inflated and deployed. Note that the extension portion 24B is disposed at the seat rear side and the seat upper side of the bar main body 26 during inflation and deployment. This enables the occupant P to be protected without preparing a dedicated energy absorption member. When the bag main body 24 is retracted, the extension portion 24B is also retracted, such that the energy absorption portion does not give a sensation of a foreign body to the occupant P in a normal use state. Furthermore, load input to the thighs of the occupant P positioned above the bar main body 26 can be suppressed.

In the present exemplary embodiment, a reaction force is applied to the bag main body 24 by the bar main body 26 that is disposed further toward the seat rear side and further toward the seat upper side than the inflator 22. This enables a reaction force to be applied to the bag main body 24 at a position that is closer to the occupant P than to the inflator 22, enabling a restraining force to be increased.

In the present exemplary embodiment, rotation of the bar main body 26 toward the storage position side is limited by the lock mechanism, such that the pelvis of the occupant can be effectively received by the bar main body 26.

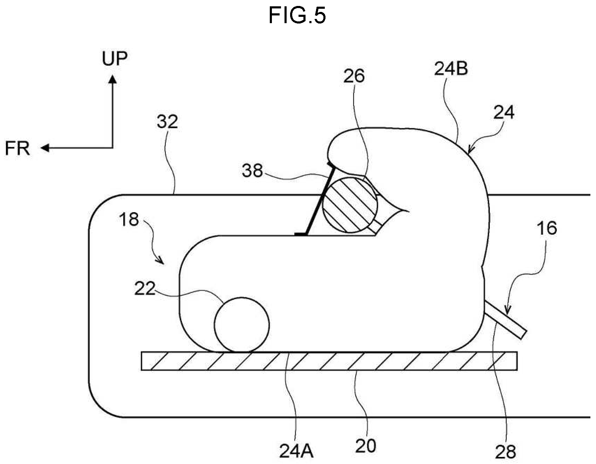

Note that a structure in which a strap 38 is provided may be used, as in the modified example illustrated in Fig. 5.

### Modified Example

Fig. 5 is a side view illustrating relevant portions of a vehicle seat according to a modified example. As illustrated in Fig. 5, in the present modified example, the airbag device 18 includes a strap 38 that connects the main chamber 24A and the extension portion 24B of the bag main body 24.

One end portion of the strap 38 is sewn to the main chamber 24A, and another end portion of the strap 38 is sewn to an upper end of the extension portion 24B. As a result, a space is provided between the strap 38 and the bag main body 24, and the bar main body 26 is inserted into the space. In other words, the bar main body 26 is held at the bag main body 24 so as not to be capable of being pulled out.

In the present modified example, the bar main body 26 is held so as not to be capable of being pulled out from between the strap 38 and the bag main body 24, thereby enabling the extension portion 24B to be suppressed from being separated from the bar main body 26. Note that there is no particular limitation to the number of the straps 38, and plural straps 38 may be provided in the seat width direction.

### Second Exemplary Embodiment

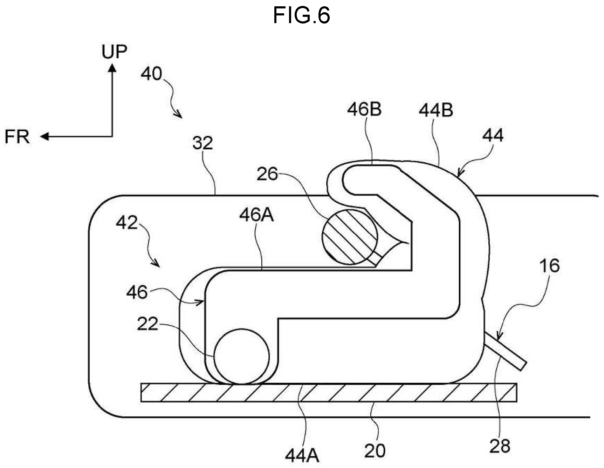

Next, explanation follows regarding a vehicle seat 40 according to a second exemplary embodiment, with reference to Fig. 6. Note that configuration elements that are the same as those in the first exemplary embodiment are appended with the same reference numerals, and explanation thereof is appropriately omitted.

Fig. 6 is a side view illustrating relevant portions of a vehicle seat 40 according to a second exemplary embodiment. As illustrated in Fig. 6, the vehicle seat 40 according to the present exemplary embodiment includes an airbag device 42.

The airbag device 42 includes the inflator 22, a bag main body 44, and an inner bag 46. Similarly to the bag main body 24 of the first exemplary embodiment, the bag main body 44 includes a main chamber 44A and an extension portion 44B.

The main chamber 44A of the bag main body 44 is arranged on the upper face of the support plate 20, and is positioned below the bar main body 26. Furthermore, the extension portion 44B extends upward from a rear end of the main chamber 44A, and is a portion that is folded back toward the seat front side. The extension portion 44B is integrally formed with the main chamber 44A.

The inner bag 46, which configures a high-pressure portion, is provided at an interior of the bag main body 44. The inner bag 46 includes an inner-side main chamber 46A that is disposed at a position corresponding to the main chamber 44A of the bag main body 44. The inflator 22 is disposed at an inner side of the inner-side main chamber 46A.

An inner-side extension portion 46B extends upward from a rear end of the inner-side main chamber 46A. The inner-side extension portion 46B is folded back toward the seat front side, and is disposed at a position corresponding to the extension portion 44B of the bag main body 44.

Although not illustrated in the drawings, a vent hole that communicates with the bag main body 44 is provided in the inner bag 46. As a result, gas generated from the inflator 22 is supplied to the inner bag 46, and thereafter, gas flows into the bag main body 44 through the vent hole. Therefore, the inner bag 46 is a high pressure portion that has a higher pressure than other portions.

### Operation

Next, explanation follows regarding operation of the vehicle seat 40 according to the present exemplary embodiment.

In the vehicle seat 40 according to the present exemplary embodiment, the inner bag 46 is inflated and deployed promptly in a case in which gas is generated from the inflator 22. Since the inner bag 46 includes the inner-side extension portion 46B, a high pressure portion is set at the extension portion 44B. In this manner, by providing the high pressure portion at the extension portion 44B of the bag main body 44, in a case in which the pelvis Q of the occupant P is received by the bar main body 26 via the extension portion 44B, the extension portion 44B can be suppressed from deflating and state arising in which the pelvis Q is directly received by the bar main body 26.

In particular, in the present exemplary embodiment, the inner bag 46 is provided as the high pressure portion, such that the pelvis Q of the occupant P can be reliably received by the high pressure portion due to prior inflation of the inner bag 46. Other operations are the same as those in the first exemplary embodiment.

### Third Exemplary Embodiment

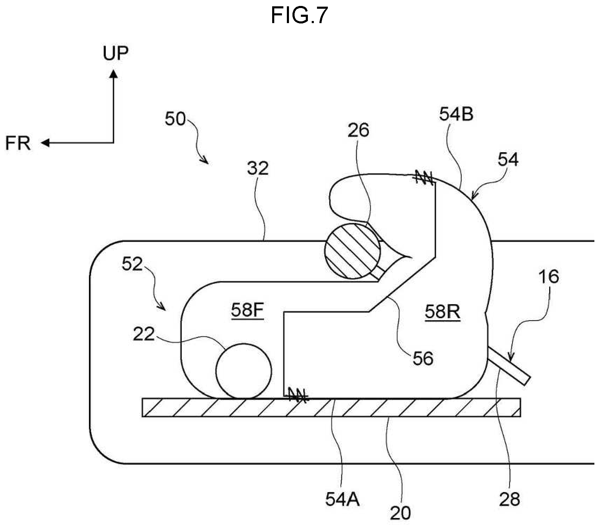

Next, explanation follows regarding a vehicle seat 50 according to a third exemplary embodiment, with reference to Fig. 7. Note that configuration elements that are the same as those in the first exemplary embodiment are appended with the same reference numerals, and explanation thereof is appropriately omitted.

Fig. 7 is a side view illustrating relevant portions of a vehicle seat 50 according to a third exemplary embodiment. As illustrated in Fig. 7, in the present exemplary embodiment, an internal space of a bag main body 54 is partitioned by a tether 56.

The vehicle seat 50 of the present exemplary embodiment includes an airbag device 52, and the airbag device 52 includes the inflator 22, the bag main body 54, and the tether 56.

Similarly to in the first exemplary embodiment, the bag main body 54 includes a main chamber 54A and an extension portion 54B. The main chamber 54A is arranged on the upper face of the support plate 20, and is positioned below the bar main body 26. Furthermore, the extension portion 54B extends upward from a rear end of the main chamber 54A, and is a portion that is folded back toward the seat front side. The extension portion 54B is integrally formed with the main chamber 54A.

The tether 56 is provided at an interior of the bag main body 54, and partitions the internal space of the bag main body 54 in the seat front-rear direction. A lower end portion of the tether 56 is sewn at further to the rear side than the inflator 22 in the main chamber 54A, and an upper end portion of the tether 56 is sewn to an upper portion of the extension portion 54B.

A front-side space, partitioned by the tether 56, is a front-side chamber 58F, and the inflator 22 is disposed in the front-side chamber 58F. Furthermore, a rear-side space, partitioned by the tether 56, is a rear-side chamber 58R, and a communication hole, which is not illustrated in the drawings, is formed in the tether 56.

Note that in the present exemplary embodiment, the inflator 22 is disposed in the front-side chamber 58F, such that the front-side chamber 58F is a high pressure portion that is higher in pressure than the rear-side chamber 58R.

### Operation

Next, explanation follows regarding operation of the vehicle seat 50 according to the present exemplary embodiment. In the present exemplary embodiment, the front-side chamber 58F is inflated and deployed promptly in a case in which gas is generated from the inflator 22. The front-side chamber 58F covers the seat rear side and the seat upper side of the bar main body 26 of the restraining member 16, such that in a case in which the pelvis Q of the occupant P is received by the bar main body 26 via the extension portion 54B, the extension portion 54B can be suppressed from deflating and a state arising in which the pelvis Q is directly received by the bar main body 26.

Furthermore, in the present exemplary embodiment, the high pressure portion can be configured with a simpler configuration compared to a configuration in which an inner bag is provided. Other operations are the same as those in the first exemplary embodiment.

### Fourth Exemplary Embodiment

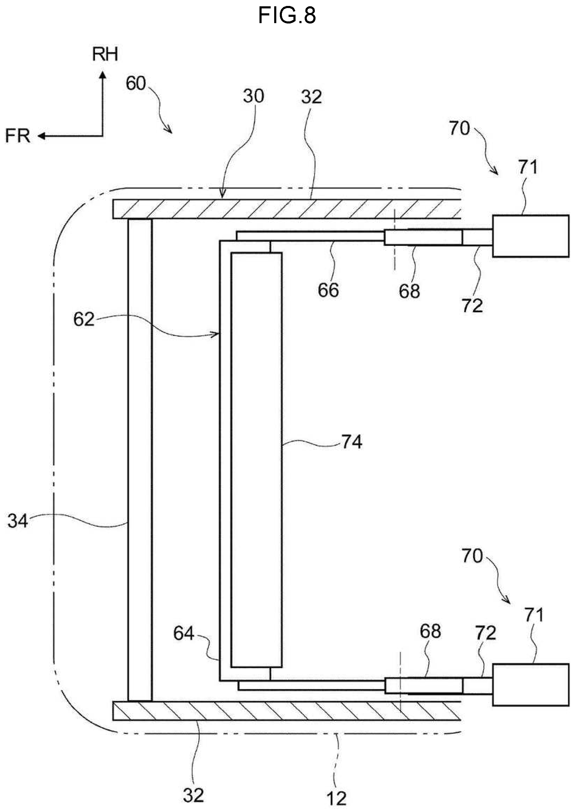

Next, explanation follows regarding a vehicle seat 60 according to a fourth exemplary embodiment, with reference to Fig. 8 to Fig. 10. Note that configuration elements that are the same as those in the first exemplary embodiment are appended with the same reference numerals, and explanation thereof is appropriately omitted.

Fig. 8 is a plan view illustrating relevant portions of a vehicle seat 60 according to a fourth exemplary embodiment. As illustrated in Fig. 8, the vehicle seat 60 of the present exemplary embodiment is different from the first exemplary embodiment in that the vehicle seat 60 does not include an airbag device.

A restraining member 62 is provided at the interior of the seat cushion 12 of the vehicle seat 60 of the present exemplary embodiment. The restraining member 62 includes a bar main body 64 and a left and right pair of links 66.

The bar main body 64 is a substantially columnar member that extends in the vehicle width direction, and that is formed of a high rigidity material capable of supporting the pelvis Q of the occupant P. Furthermore, the respective links 66 are attached to end portions of the bar main body 64.

Each link 66 is an elongated member, and extends in the front-rear direction. A front end portion of the link 66 is attached to an end portion, in the seat width direction, of the bar main body 64, and a rear end portion of the link 66 is rotatably connected to the side frame 32.

A fan-shaped portion 68 is provided at the rear end portion of the link 66, and the fan-shaped portion 68 is engaged with a cylinder key 72 that configures a piston-cylinder type actuator 70.

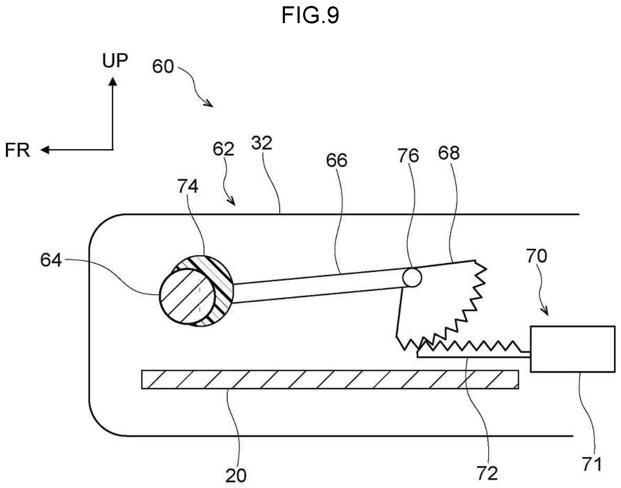

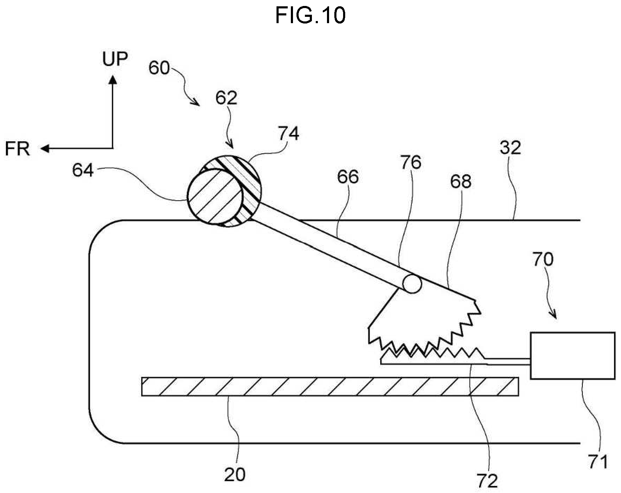

The piston-cylinder type actuator 70 is disposed further to the rear than the restraining member 62. Fig. 9 is a side view illustrating relevant portions of the vehicle seat 60 according to the present exemplary embodiment, illustrating a state prior to actuation of the piston-cylinder type actuator 70, and Fig. 10 is a view illustrating a state in which the piston-cylinder type actuator 70 has been actuated.

As illustrated in Fig. 9, the fan-shaped portion 68 is integrally formed with the link 66, and is configured so as to be rotatable with respect to the side frame 32 at a support shaft portion 76. Namely, the link 66 and the fan-shaped portion 68 are rotatable about the support shaft portion 76.

The piston-cylinder type actuator 70 includes a gas generating portion 71 and the cylinder key 72, and the cylinder key 72 is engaged with the fan-shaped portion 68.

The gas generating portion 71 is housed in the seat cushion 12, and projects the cylinder key 72 out toward the seat front side by generating gas in a case in which a frontal collision is detected or predicted. The cylinder key 72 is an elongated member that extends in the seat front-rear direction, and plural teeth are provided on an upper face of the cylinder key 72. The teeth provided on the cylinder key 72 mesh with teeth of the fan-shaped portion 68 that is provided at the rear end portion of the link 66, and the fan-shaped portion 68 and the link 66 are locked so as not to rotate in a normal state.

As illustrated in Fig. 10, in a case in which a frontal collision of the vehicle is detected or predicted, gas is generated from the gas generating portion 71, and the cylinder key 72 projects out toward the seat front side. Accompanying this, the fan-shaped portion 68, which is engaged with the cylinder key 72, rotates about the support shaft portion 76.

The link 66, which is integrally formed with the fan-shaped portion 68, rotates clockwise due to the rotation of the fan-shaped portion 68, such that the bar main body 64 moves toward the seat rear side and the seat upper side. Note that the position of the bar main body 64 illustrated in Fig. 9 is a storage position, and the position of the bar main body 64 illustrated in Fig. 10 is a deployment position. In the deployment position illustrated in Fig. 10, the position is substantially the same as the position of the bar main body 26 illustrated in Fig. 1, such that the pelvis Q of the occupant P can be supported from the seat front side by the bar main body 64 (see Fig. 1).

Furthermore, as illustrated in Fig. 8 to Fig. 10, a cushioning member 74, which serves as an energy absorption portion, is provided at a face, at the seat rear side, and a face, at the seat upper side, of the bar main body 64. The cushioning member 74 is not particularly limited as long as it is a material that is capable of absorbing energy, and in the present exemplary embodiment, as an example, the cushioning member 74 is formed of a foam material such as urethane foam.

### Operation

Next, explanation follows regarding operation of the vehicle seat 60 according to the present exemplary embodiment.

In the present exemplary embodiment, the bar main body 64 of the restraining member 62 is configured so as to be moveable between the storage position, and the deployment position that is capable of supporting the pelvis Q of the occupant P from the seat front side at further toward the seat upper side than the storage position. Furthermore, the piston-cylinder type actuator 70 is housed in the seat cushion 12, and moves the bar main body 64 to the deployment position in a case in which a frontal collision is detected or predicted.

Note that the cushioning member 74 is provided at the face, at the seat rear side, and the face, at the seat upper side, of the bar main body 64 that is disposed at the deployment position, such that the pelvis Q of the occupant P is received by the bar main body 64 via the cushioning member 74, and excessive load can be suppressed from being input to the waist portion of the occupant P.

Although explanation has been given regarding the vehicle seat according to the present disclosure, it is of course possible to implement the present disclosure in various modes within a range not departing from the gist of the present disclosure. In the above-described exemplary embodiments, as illustrated in Fig. 3 and Fig. 4, although the configuration is such that the restraining member 16 includes the bar main body 26, the present disclosure is not limited thereto. For example, a substantially rectangular flat plate-like restraining member may be used instead of the bar main body 26. In such a case, the pelvis of the occupant can be supported on a plane.

Furthermore, in the above-described exemplary embodiments, although explanation has been given regarding a configuration in which the link 28 of the restraining member 16 is connected to the side frame 32, the present disclosure is not limited thereto, and the link may be attached to another frame.

Furthermore, in the above-described exemplary embodiments, although the bag main body 24 includes the main chamber 24A and the extension portion 24B, the present disclosure is not limited thereto, and other shapes may be used. For example, a configuration may be such that the bag main body 24 is formed into a substantially cylindrical shape, and the bar main body 26 is inserted therethrough. In such a case, separation of the bar main body 26 from the bag main body 24 can be reliably suppressed.

With regard to the above-described exemplary embodiments, the following additional notes are disclosed.

### Additional Note 1

A vehicle seat, includes:
a restraining member which is housed in a seat cushion and which is moveable between a storage position and a deployment position that is capable of supporting a pelvis of an occupant from a seat front side at further toward a seat upper side than the storage position; and
an airbag device that is housed in the seat cushion, that inflates and deploys in a case in which a frontal collision is detected or predicted, and that moves the restraining member to the deployment position,
wherein an energy absorption portion is provided at a face, at a seat rear side, of the restraining member that is disposed at the deployment position.

### Additional Note 2

The vehicle seat according to Additional Note 1, wherein the restraining member includes:
a bar main body that extends in a vehicle width direction; and
a left and right pair of links, respective front end portions of the links being attached to end portions, in a seat width direction, of the bar main body, and respective rear end portions of the links being rotatably connected to connection portions positioned further toward the seat rear side than the bar main body.

### Additional Note 3

The vehicle seat according to Additional Note 2, wherein the connection portions are respectively provided at left and right side frames configuring a skeleton of the seat cushion.

### Additional Note 4

The vehicle seat according to Additional Note 2 or Additional Note 3, wherein:
the airbag device includes a bag main body and an inflator that is configured to supply gas to the bag main body; and
the bag main body includes an extension portion that is disposed further toward the seat rear side than the bar main body during inflation and deployment and that configures the energy absorption portion.

### Additional Note 5

The vehicle seat according to Additional Note 4, wherein the extension portion covers a range from a seat rear side of the bar main body to a seat upper side of the bar main body.

### Additional Note 6

The vehicle seat according to Additional Note 4 or Additional Note 5, wherein, in the deployment position, the bar main body is disposed further toward the seat rear side and further toward the seat upper side than the inflator.

### Additional Note 7

The vehicle seat according to any one of Additional Note 2 to Additional Note 6, further including a lock mechanism that limits rotation of the bar main body toward a storage position side in a state in which the bar main body has moved to the deployment position.

### Additional Note 8

The vehicle seat according to any one of Additional Note 4 to Additional Note 7, wherein the airbag device includes a strap that is sewn to the bag main body and that holds the bar main body so as not to be capable of being pulled out.

### Additional Note 9

The vehicle seat according to any one of Additional Note 4 to Additional Note 8, wherein a high pressure portion, which has a higher pressure than other portions, is provided at the extension portion of the bag main body.

### Additional Note 10

The vehicle seat according to Additional Note 9, wherein the high pressure portion is configured by an inner bag in which the inflator is housed.

### Additional Note 11

The vehicle seat according to Additional Note 9, wherein:
the bag main body is partitioned into at least two chambers in a seat front-rear direction by a tether; and
the high pressure portion is set in a chamber at the seat front side.

### Additional Note 12

A vehicle seat, includes:
a restraining member which is housed in a seat cushion and which is moveable between a storage position and a deployment position that is capable of supporting a pelvis of an occupant from a seat front side at further toward a seat upper side than the storage position; and
a piston-cylinder type actuator that is housed in the seat cushion and that moves the restraining member to the deployment position in a case in which a frontal collision is detected or predicted,
wherein an energy absorption portion is provided at a face, at a seat rear side, of the restraining member that is disposed at the deployment position.

## Claims

1. A vehicle seat (10), comprising:
a restraining member (16) which is housed in a seat cushion (12) and which is moveable between a storage position and a deployment position that is capable of supporting a pelvis of an occupant from a seat front side at further toward a seat upper side than the storage position; and
an airbag device (18) that is housed in the seat cushion (12), configured to inflate and deploy in a case in which a frontal collision is detected or predicted, and to move the restraining member (16) to the deployment position,
wherein an energy absorption portion (24B) is provided at a face, at a seat rear side, of the restraining member (16) that is disposed at the deployment position.

2. The vehicle seat (10) according to claim 1, wherein the restraining member comprises:
a bar main body (26) that extends in a vehicle width direction; and
a left and right pair of links (28), respective front end portions of the links being attached to end portions, in a seat width direction, of the bar main body (26), and respective rear end portions of the links (28) being rotatably connected to connection portions positioned further toward the seat rear side than the bar main body (26).

3. The vehicle seat according to claim 2, wherein the connection portions are respectively provided at left and right side frames (32) configuring a skeleton of the seat cushion (12).

4. The vehicle seat (10) according to claim 2 or 3, wherein:
the airbag device (18) comprises a bag main body (24) and an inflator (22) that is configured to supply gas to the bag main body (24); and
the bag main body (24) comprises an extension portion (24B) that is disposed further toward the seat rear side than the bar main body (26) during inflation and deployment and that configures the energy absorption portion (24B).

5. The vehicle seat according to claim 4, wherein the extension portion (24B) covers a range from a seat rear side of the bar main body (26) to a seat upper side of the bar main body (26).

6. The vehicle seat according to claim 4 or 5, wherein, in the deployment position, the bar main body (26) is disposed further toward the seat rear side and further toward the seat upper side than the inflator (22).

7. The vehicle seat according to any of claims 2 to 6, further comprising a lock mechanism configured to limit rotation of the bar main body (26) toward a storage position side in a state in which the bar main body (26) has moved to the deployment position.

8. The vehicle seat according to any of claims 2 to 7 in combination with claim 4, wherein the airbag device (18) comprises a strap (38) that is sewn to the bag main body (24) and that holds the bar main body (26) so as not to be capable of being pulled out.

9. The vehicle seat (40) according to any of claims 2 to 8 in combination with claim 4, wherein a high pressure portion (58F), which has a higher pressure than other portions, is provided at the extension portion (44B) of the bag main body (44).

10. The vehicle seat (40) according to claim 9, wherein the high pressure portion (58F) is configured by an inner bag (46) in which the inflator (22) is housed.

11. The vehicle seat (50) according to claim 9, wherein:
the bag main body (54) is partitioned into at least two chambers in a seat front-rear direction by a tether (56); and
the high pressure portion (58F) is set in a chamber at the seat front side.

12. A vehicle seat (60), comprising:
a restraining member (62) which is housed in a seat cushion (12) and which is moveable between a storage position and a deployment position that is capable of supporting a pelvis of an occupant from a seat front side at further toward a seat upper side than the storage position; and
a piston-cylinder type actuator (70) that is housed in the seat cushion (12) and that moves the restraining member to the deployment position in a case in which a frontal collision is detected or predicted,
wherein an energy absorption portion is provided at a face, at a seat rear side, of the restraining member (62) that is disposed at the deployment position.
